# EUROPÄISCHE PATENTSCHRIFT

(11) **EP 2 216 148 B1**
(45) Veröffentlichungstag und Bekanntmachung des Hinweises auf die Patenterteilung: **25.02.2015**
(21) Anmeldenummer: 09015111.9
(22) Anmeldetag: 07.12.2009
(51) Int. Cl.: B27B 5/29, B23D 47/00, B23D 45/04

(54) **Kappsäge**
Mitre saw
Scie à onglet

(30) Priorität: 06.02.2009 DE 202009001521 U
(43) Veröffentlichungstag der Anmeldung: 11.08.2010
(73) Patentinhaber: Metabowerke GmbH, 72622 Nürtingen (DE)
(72) Erfinder: Raasch, Klaus, 49744 Geeste (DE); Niemann, Bernhard, 49740 Haselünne (DE)
(74) Vertreter: Lorenz, Markus

(56) Entgegenhaltungen:
- DE-U1- 8 317 154

## Beschreibung

Die Erfindung betrifft eine Kappsäge mit den Merkmalen des Oberbegriffs von Anspruch 1.

Kappsägen der in Rede stehenden Art sind seit Jahrzehnten bekannt (EP-A-1 557 231). Sie werden zur Bearbeitung aller Arten von Werkstoffen eingesetzt. Ein besonderes Anwendungsfeld finden Kappsägen bei der Holzbearbeitung. Sie sind aber auch für die Kunststosbearbeitung und die Metallbearbeitung zu finden.

Eine typische Kappsäge hat ein um eine Querachse schwenkbar angebrachtes Sägeaggregat, dessen Sägeblatt aus einer angehobenen Ruhestellung in eine abgesenkte Sägestellung und umgekehrt schwenkbar ist, Mit dieser Bewegung des Sägeblattes kann ein auf einer Werkstückauflagefläche eines Trägers befindliches Werkstück abgeschnitten - gekappt - werden.

Das Sägeaggregat einer Kappsäge ist normalerweise in Richtung der Ruhestellung vorgespannt. Das geschieht meist durch eine Federanordnung. Das Sägeaggregat wird an einem Betätigungshandgriff angefaßt und zum Ausführen des Sägeschnittes entgegen der Vorspannkraft nach unten geschwenkt bis das auf der Werkstückauflagefläche befindliche Werkstück vollständig durchtrennt ist. Dabei tritt ein kleines Teilstück des Sägeblattes des Sägeaggregates randseitig in einen Eintauchschlitz in der Werkstückauflagefläche ein.

Die bekannte Kappsäge, von der die Erfindung ausgeht (EP-A-1 557 231), ist eine Kapp-, Gehrungs- und Zugsäge, mit der Kappschnitte, Gehrungsschnitte und Schifterschnitte (Doppel-Gehrungs-Schnitte) ausgeführt werden können. Wegen einer außerdem wie bei einer Radialarmsäge realisierten Zugfunktion können die ausgeführten Schnitte länger sein als es der wirksame Schnitthalbmesser des Sägeblattes vorgibt.

Bei der bekannten Kappsäge ist das Sägeaggregat mittels einer Halterung am Träger angebracht. Bei der Kappfunktion wird das Sägeaggregat um eine Querachse aus der angehobenen Ruhestellung in die abgesenkte Sägestellung und umgekehrt geschwenkt.

An der Halterung, meist zwischen Halterung und Träger, ist hier im übrigen eine Neigungsverstellung vorgesehen. Die Neigungsverstellung erlaubt es, das Sägeaggregat gegenüber der Werkstückauflagefläche seitlich zu neigen, so daß entsprechende Gehrungsschnitte mit einem durch die Neigungsverstellung vorgegebenen Gehrungswinkel ausgeführt werden können. Typische Gehrungswinkel wie 45° oder 30°, zusätzlich zu dem Winkel von ±0° für die Normalstellung, sind durch Bolzen oder Hebel, die von Hand betätigt werden, einrastend fixierbar. Bekannt sind häufig aber auch eine stufenlose Verstellung und eine Fixierung mittels einer Spannschraube mit Spannknebel.

Eine Kappsäge der in Rede stehenden Art hat normalerweise ein Sägeaggregat mit einem Betätigungshandgriff, einem Antriebsmotor, einem vom Antriebsmotor angetriebenen, auf einer Welle gelagerten Sägeblatt, einem das Sägeblatt von oben her etwa über die Hälfte abdeckenden feststehenden Schutzhaube und einer Pendelschutzhaube, die in der angehobenen Ruhestellung den unteren Teil des Zahnkranzes des Sägeblattes berührungssicher abdeckt.

Bei Erreichen der angehobenen Ruhestellung ist das Sägeaggregat von selbst verriegelbar, Damit ist sichergestellt, daß das Sägeaggregat nicht versehentlich ungewollt nach unten schlagen kann, womit erhebliche Gefahren für eine Bedienungsperson verbunden wären. Aus der verriegelten, angehobenen Ruhestellung ist das Sägeaggregat durch eine manuelle Betätigung eines Entriegelungselementes wieder entriegelbar. Dieses Entriegelungselement ist meist ein kleiner Hebel am Betätigungshandgriff. Ist das Entriegelungselement nicht manuell betätigt, so ist die Pendelschutzhaube in Schutzstellung blockiert. Gleichzeitig ist das Sägeaggregat in der angehobenen Ruhestellung blockiert (verriegelt).

Betätigt man das Entriegelungselement manuell, so wird zum einen das Sägeaggregat wieder entriegelt, so daß es dann kontrolliert in die Sägestellung abgesenkt werden kann. Gleichzeitig ist dann die Pendelschutzhaube wieder entriegelt und kann dem Abseukvorgang des Sägeaggregates folgend aufschwenken.

Der Antriebsmotor des Sägeaggregates mit dem Sägeblatt, der feststehenden Schutzhaube und der Pendelschutzhaube ist bei einer Kappsäge der in Rede stehenden Art insgesamt an einem Kapparm angebracht. Der Kapparm trägt also praktisch das Sägeaggregat bzw. ist der tragende Teil des Sägeaggregates. Dieser Kapparm ist seinerseits um die Querachse schwenkbar an der Halterung gelagert.

Ist eine Neigungsverstellung vorgesehen, so ist die Querachse ihrerseits an einem Kipparm angeordnet, der um die in Sägerichtung verlaufende, horizontale Neigungs-Schwenkachse schwenkbar ist.

Die bereits erwähnte Vorspannung des Sägeaggregates in Richtung der Ruhestellung ist bei der bekannten Kappsäge, von der die Erfindung ausgeht, durch eine Federanordnung realisiert. Um die angehobene Ruhestellung des Sägeaggregates, in der dann von selbst die Verriegelung erfolgen soll, genau zu definieren, weist der Kapparm rückwärtig einen Ruhestellungsanschlag auf Bei Erreichen der angehobenen Ruhestellung des Sägeaggregates kommt der Ruhestellungsanschlag an einem Gegenanschlag an der Halterung zur Anlage und beendet so die Aufwärts-Schwenkbewegung des Kapparms/Sägeaggregates.

Meist ist der Gegenanschlag an der Halterung in seiner Lage relativ zum Ruhestellungsanschlag einstellbar. Damit kann man den Gegenanschlag so justieren, daß die angehobene Ruhestellung des Sägeaggregates so liegt, daß die Verriegelung des Sägeaggregates sicher einrastet.

Ein permanentes Problem bei Kappsägen der in Rede stehenden Art ist der Anfall von Staub und Sägespänen. Selbst wenn, wie an sich bekannt, am Sägeaggregat eine Staubabsaugung vorgesehen ist, läßt sich nicht verhindern, daß sich die gesamte Kappsäge, insbesondere auch im Bereich der Halterung, mit Staub und Sägespänen zusetzt. Das hat zur Folge, daß sich auf dem Gegenanschlag oder dem Ruhestellungsanschlag Staub und Sägespäne ansammeln. Bei umfangreicher Benutzung kann sich ein regelrechter Staubkuchen auf dem Gegenanschlag absetzen. Dadurch kann es passieren, daß das Sägeaggregat die eigentlich vorgesehene Position in der angehobenen Ruhestellung nicht erreicht. Das wiederum hat zur Folge, daß die Verriegelung des Sägeaggregates in der angehobenen Ruhestellung nicht einrastet. Das Sägeaggregat ist zwar scheinbar in der sicheren, angehobenen Ruhestellung angelangt, tatsächlich kann es aber wegen der Wirkungslosigkeit der Verriegelung unabsichtlich nach unten schlagen.

Der Erfindung liegt das Problem zugrunde, die bekannte Kappsäge mit Bezug auf die angehobene Ruhestellung so auszugestalten und weiterzubilden, daß die Ruhestellung auch unter ungünstigen Arbeitsumständen stets sicher erreichbar ist.

Das zuvor aufgezeigte Problem ist bei einer Kappsäge mit den Merkmalen des Oberbegriffs von Anspruch 1 durch die Merkmale des kennzeichnenden Teils von Anspruch 1 gelöst. Bevorzugte Ausgestaltungen und Weiterbildungen sind Gegenstand der Unteransprüche,

Erfindungsgemäß wird zwischen dem Ruhestellungsanschlag und dem Gegenanschlag definiert eine linienförmige, also keine flächige Anlage realisiert.

Bislang war es so, daß sich der Staubkuchen auf dem meist unten sitzenden Gegenanschlag absetzte. Da auch der Ruhestellungsanschlag flächig ausgebildet war, wurde der Staubkuchen zwischen Ruhestellungsanschlag und Gegenanschlag zusammengepreßt und im Laufe der Zeit immer stärker und kompakter verdichtet. Mit zusätzlichem Staubanfall wuchs die Höhe dieses Staubkuchens auf dem Gegenanschlag. Binnen kurzem stimmte die Lage des Sägeaggregates in der angehobenen Ruhestellung nicht mehr, es wurde in der angehobenen Ruhestellung nicht mehr von selbst verriegelt.

Erfindungsgemäß ist erkannt worden, daß eine linienförmige Anlage zwischen Ruhestellungsanschlag und Gegenanschlag dazu führt, daß der Staubkuchen nicht entsteht. Jedenfalls wird der Staubkuchen nicht flächig gepreßt und verdichtet. Vielmehr trifft nur eine Anlagekante auf den Staubkuchen und drückt diesen zur Seite. Zumindest ist die Flächenpressung durch die linienförmige Anlage wesentlich höher als bei einer lediglich flächigen Anlage.

Insgesamt wird der Staubkuchen, wenn er sich denn überhaupt noch bilden sollte, durch die linienförmige Anlage im Bereich der Anschläge unwirksam gemacht. Das Sägeaggregat erreicht immer die für die Verriegelung ausreichende Position in der angehobenen Ruhestellung.

Normalerweise ist der Gegenanschlag an der Halterung das untere Teil und der Ruhestellungsanschlag am Kapparm ist das obere Teil, so daß der Ruhestellungsanschlag am Gegenanschlag von oben her zur Anlage kommt. Dann empfiehlt es sich auch, daß insbesondere der Ruhestellungsanschlag die linienförmige Anlage bereitstellt, die an dem Gegenanschlag zur Anlage kommt. Der Gegenanschlag muß nicht unbedingt selbst eine linienförmige Anlage bilden.

Im folgenden wird die Erfindung anhand einer lediglich ein bevorzugtes Ausführungsbeispiel darstellenden Zeichnung näher erläutert. Bei der Erläuterung der Zeichnung werden auch weitere Details und Besonderheiten der Erfindung angesprochen und erläutert. In der Zeichnung zeigt
- Fig. 1: in perspektivischer Ansicht ein Ausführungsbeispiel einer erfindungsgemäßen Kappsäge und
- Fig. 2: ausschnittweise, stark vergrößert, teilweise demontiert, in einer Ansicht schräg von hinten rechts in Fig. 1, den rückwärtigen Bereich der Halterung der Kappsäge aus Fig. 1.

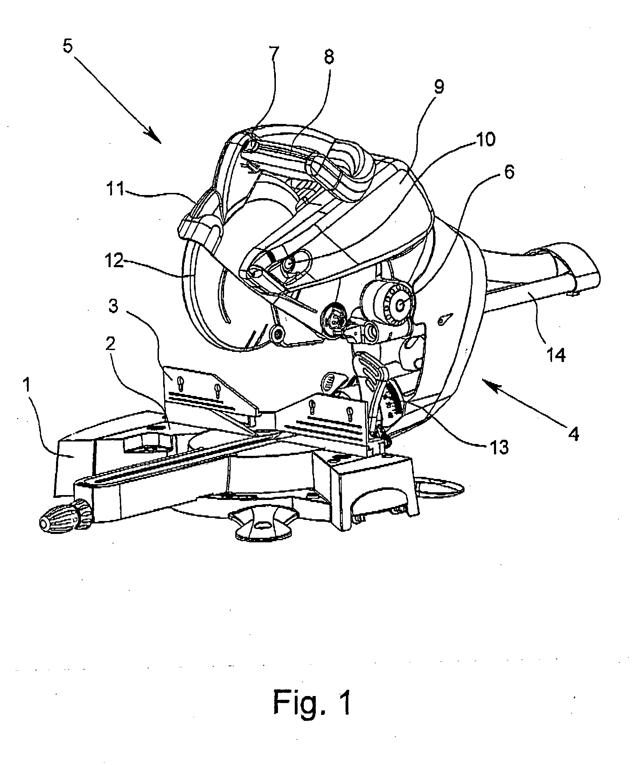

Fig. 1 zeigt eine Kappsäge, genauer gesagt eine Kapp-, Gehrungssäge- und Zugsäge.

Die in Fig. 1 dargestellte Kappsäge weist zunächst einen Träger 1 auf, der eine Werkstückauflagefläche 2 bildet. Das rückwärtige Ende der Werkstückauflagefläche 2 bildet hier eine Anschlagschiene 3, an der ein Werkstück, beispielsweise eine Holzleiste, angelegt werden kann. Am Träger 1 ist eine Halterung 4 angebracht, die rückwärtig hinter der Werkstückauflagefläche 2 liegt.

An der Halterung 4 oberhalb des Trägers 1 angebracht ist ein Sägeaggregat 5. Dieses ist im dargestellten und bevorzugten Ausführungsbeispiel um eine Querachse 6 schwenkbar und befindet sich oberhalb der Werkstückauflagefläche 2.

Das Sägeaggregat 5 ist bei Erreichen der angehobenen Ruhestellung von selbst verriegelbar. Diese Verriegelung erkennt man in Fig. 1 nicht. Aus dieser Verriegelung ist das Sägeaggregat 5 durch eine manuelle Betätigung eines Entriegelungselementes 7, das in Fig. 1 links oben angedeutet ist, wieder entriegelbar. Dieses Entriegelungselement 7 befindet sich an dem oben erkennbaren Betätigungshandgriff 8, der auch einen in Fig. 1 nicht erkennbaren Schalter zum Einschalten des Antriebsmotors 9 des Sägeaggregates aufweist.

Vom Antriebsmotor 9 des Sägeaggregates 5 wird ein hier nicht erkennbares, nämlich verdecktes Sägeblatt angetrieben, das auf einer Welle 10 gelagert ist. Das Sägeblatt wird von oben her etwa über die Hälfte durch eine feststehende Schutzhaube 11 abgedeckt, während eine Pendelschutzhaube 12, die in der in Fig. 1 dargestellten Ruhestellung den unteren Teil des Zahnkranzes des Sägeblattes abdeckt, beim Absenken des Sägeaggregates 5 automatisch aufschwenkt.

Fig. 1 zeigt eine besondere Konstruktion der Kappsäge in Form einer seitlichen Neigungsverstellung 13. Diese ist nicht erfndungswesentlich und bedarf daher hier keiner weiteren Erläuterung.

Ferner zeigt Fig. 1 eine weitere Besonderheit der Kappsäge in Form einer Zugfunktion. Das Sägeaggregat 5 ist an der Halterung 4 nicht nur mittels der Querachse 6 schwenkbar gelagert, sondern zusätzlich auch noch mittels einer in Sägerichtung verlaufenden Zugführung 14 aus zwei parallel verlaufenden Zugstangen verschiebbar gelagert. Mit einer solchen Zugfunktion läßt sich der ausführbare Sägeschnitt verlängern.

Fig. 1 zeigt das Sägeaggregat 5 in seiner angehobenen Ruhestellung, in der es von selbst verriegelt ist.

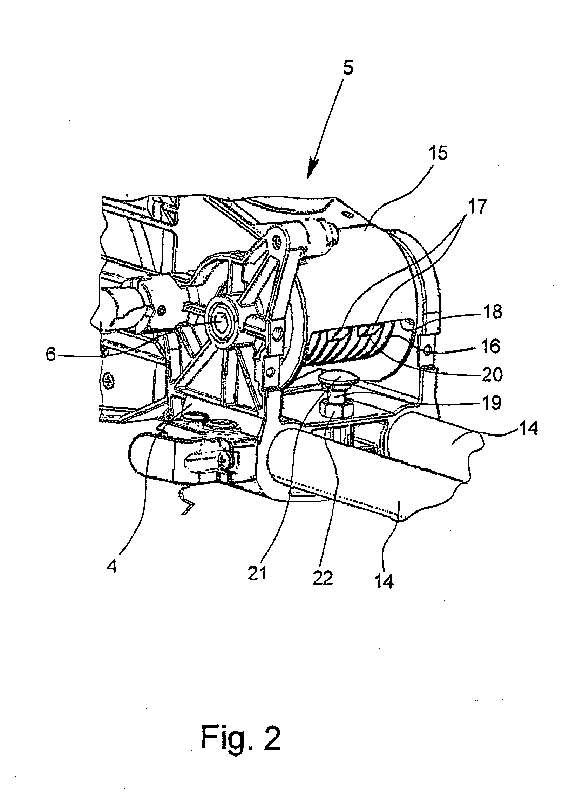

Fig. 2 zeigt das Sägeaggregat aus Fig. 1, teilweise geöffnet, in vergrößerter Darstellung von rechts hinten in Fig. 1, allerdings in der abgesenkten Sägestellung. Man erkennt die Zuführung 14, die Halterung 4 mit der Querachse 6 und einen Kapparm 15, der um die Querachse 6 schwenkbar gelagert ist und das Sägeaggregat 5 bzw. seine Bestandteile trägt. Man erkennt in Fig. 2 auch, daß der Kapparm 15 und damit das Sägeaggregat 5 durch eine Federanordnung 16, hier in Form einer vielfach gewickelten Schenkelfeder, in Richtung der Ruhestellung vorgespannt ist.

Der Kapparm 15 weist rückwärtig einen Ruhestellungsanschlag 17 auf. Diese erkennt man einstückig angeformt am oberen Rand des Ausschnittes 18 des Kapparms 15. Dieser Ruhestellungsanschlag 17 kommt bei Erreichen der angehobenen Ruhestellung des Sägeaggregates 5 bzw, des Kapparms 15 an einem Gegenanschlag 19 an der Halterung 4 zur Anlage.

Fig. 2 zeigt die Kappsäge aus Fig. 1 in Sägestellung, also bei abgesenktem Kapparm 16 und Sägeaggregat 5. Hier ist der Ruhestellungsanschlag 17 ein erhebliches Stück nach oben vom Gegenanschlag 19 entfernt. Schwenkt das Sägeaggregat 5 nach oben in Richtung der Ruhestellung, so senkt sich der Ruhestellungsanschlag 17 in Fig. 2 von oben her auf den Kopf des Gegenanschlags 19 ab. Bei Erreichen des Gegenanschlags 19 wird die weitere Hochschwenkbewegung des Sägeaggregates 5 beendet.

Fig. 2 läßt nun erkennen, daß der Ruhestellungsanschlag 17 hier am Gegenanschlag 19 linienförmig und nicht flächig zur Anlage kommt. Es handelt sich sogar um eine ausschließlich linienförmige Anlage rechts und links am Gegenanschlag 19.

Grundsätzlich könnte die Konstruktion auch ungekehrt gewählt sein.

Eine Möglichkeit, den Ruhestellungsanschlag 17 zu linienförmiger Anlage am Gegenanschlag 19 auszubilden besteht darin, den Ruhestellungsanschlag 17 ringförmig auszubilden oder an ihm eine ringförmige Anlagekante auszubilden. Dann ist der Ruhestellungsanschlag 17 gewissermaßen im Inneren hohl und ein Staubkuchen hat keinen Einfluß auf den Abstand zwischen Ruhestellungsanschlag 17 und Gegenanschlag 19.

Ein Staubkuchen wird bei der lediglich linienförmigen Anlage der Anschläge 17, 19 nicht flächig verpreßt und kann deswegen dann auch keinen kompakten Puffer bilden. Die Flächenpressung durch linienförmige Anlage ist wesentlich höher, so daß selbst ein sich ansatzweise bildender Staubkuchen leicht durchgedrückt und weggeschoben werden kann. Folglich bildet sich durch die erfindungsgemäße Konstruktion immer eine saubere Anlage zwischen Ruhestellungsanschlag 17 und Gegenanschlag 19 aus. Die angehobene Ruhestellung des Sägeaggregates 5 wird stets sicher erreicht, die Verriegelung in der angehobenen Ruhestellung ist gewährleistet.

Bei ringförmiger Gestaltung des Ruhestellungsanschlags 17 ist zweckmäßigerweise vorzusehen, daß der Ruhestellungsanschlag 17 an seiner umlaufenden Innenkante einen etwas geringeren Durchmesser als der Gegenanschlag 19 im Anlagebereich aufweist. Das gilt natürlich auch wieder in entsprechender Weise bei umgekehrter Zuordnung von Gegenanschlag 19 und Ruhestellungsanschlag 17.

Das dargestellte und bevorzugte Ausführungsbeispiel zeigt in Fig. 2 eine etwas andere Konstruktion, bei der der Ruhestellungsanschlag 17 mindestens eine quer zum Gegenanschlag 19 verlaufende Anlagekante 20 aufweist. Konkret ist es im Ausführungsbeispiel vorgesehen, daß der Ruhestellungsanschlag 17 zwei parallel zueinander verlaufende Anlagekanten 20 aufweist, deren Abstand etwas geringer ist als die Breite des Gegenanschlags 19 im Anlagebereich. Die beiden Anlagekanten 20 verlaufen hier etwa quer zur Querachse 6.

Man kann sich anhand von Fig. 2 gut erklären, wie die rechte und die linke Anlagekante 20 linienförmig auf den Anlagebereich des Gegenanschlags 19 treffen.

Das dargestellte und bevorzugte Ausführungsbeispiel zeigt ferner, daß der Anlagebereich des Gegenanschlags 19 durch den Kopf 21 einer Schraube, hier durch den leicht gewölbten Kopf 21 einer Flachkopfschraube, gebildet ist. Der Gegenanschlag 19 ist hier spezifiziert als Schraube mit einem leicht gewölbten Kopf 21. Um die Relativlage des Kopfes 21, der den Anlagebereich des Gegenanschlags 19 bildet, relativ zum Ruhestellungsanschlag 17, also dessen beiden Anlagekanten 20, verstellen zu können, ist hier eine Kontermutter 22 zur Verspannung an der Halterung 4 vorgesehen.

Gerade der leicht gewölbte Flachkopf 21 der hier verwirklichten Flachkopfschraube, die den Gegenanschlag 19 bildet, unterstützt die Funktion, daß sich kein Staubkuchen auf dem Kopf 21 des Gegenanschlags 19 bildet bzw. Staub einfach abrutscht oder seitlich weggepreßt wird, wenn die Anlagekanten 20 auf den Kopf 21 treffen.

## Patentansprüche

1. Kappsäge mit
einem Träger (1), der eine Werkstückauflagefläche (2) bildet,
einer am Träger (1) angebrachten Halterung (4) und
einem an der Halterung (4) oberhalb der Werkstückauflagefläche (2) angebrachten Sägeaggregat (5), das um eine Querachse (6) aus einer angehobenen Ruhestellung in eine abgesenkte Sägestellung und umgekehrt schwenkbar ist,
wobei das Sägeaggregat (5) bei Erreichen der angehobenen Ruhestellung von selbst verriegelbar und durch eine manuelle Betätigung eines Entriegelungselementes (7) wieder entriegelbar ist,
wobei das Sägeaggregat (5) einen Antriebsmotor (9) aufweist, der an einem Kapparm (15) angebracht ist, der seinerseits um die Querachse (6) schwenkbar gelagert ist,
wobei der Kapparm (15) durch eine Federanordnung (16) in Richtung der Ruhestellung des Sägeaggregates (5) vorgespannt ist und rückwärtig einen Ruhestellungsanschlag (17) aufweist, der bei Erreichen der angehobenen Ruhestellung des Sägeaggregates (5) an einem Gegenanschlag (19) an der Halterung (4) zur Anlage kommt,
**dadurch gekennzeichnet,**
**daß** der Ruhestellungsanschlag (17) am Gegenanschlag (19) oder der Gegenanschlag (19) am Ruhestellungsanschlag (17) linienförmig, vorzugsweise ausschließlich linienförmig, also nicht flächig zur Anlage kommt.

2. Kappsäge nach Anspruch 1, **dadurch gekennzeichnet,**
**daß** der Ruhestellungsanschlag (17) oberhalb des Gegenanschlags (19) liegt und von oben her am Gegenanschlag (19) zur Anlage komme.

3. Kappsäge nach Anspruch 1 oder 2, **dadurch gekennzeichnet,**
**daß** der Ruhestellungsanschlag (17) ringförmig ausgebildet ist oder eine ringförmige Anlagekante aufweist,

4. Kappsäge nach Anspruch 3, **dadurch gekennzeichnet,**
**daß** der Ruhestellungsanschlag (17) an seiner umlaufenden Anlagekante einen etwas geringeren Durchmesser als der Gegenanschlag (19) im Anlagebereich aufweist.

5. Kappsäge nach Anspruch 1 oder 2, **dadurch gekennzeichnet,**
**daß** der Ruhestellungsanschlag (17) mindestens eine quer zum Gegenanschlag (19) verlaufende Anlagekante (20) aufweist.

6. Kappsäge nach Anspruch 5, **dadurch gekennzeichnet,**
**daß** der Ruhestellungsanschlag (17) zwei parallel zueinander verlaufende Anlagekanten (20) aufweiset, deren Abstand geringer ist als die Breite des Gegenanschlags (19) im Anlagebereich.

7. Kappsäge nach Anspruch 6, **dadurch gekennzeichnet,**
**daß** die Anlagekante (20) etwa quer zur Querachse (6) verlaufen.

8. Kappsäge nach einem der Ansprüche 1 bis 7, **dadurch gekennzeichnet,**
**daß** der Anlagebereich des Gegenanschlags (19) durch den Kopf (21) einer Schraube, vorzugsweise durch den leicht gewölbten Kopf (21) einer Flachkopfschraube, gebildet ist.

9. Kappsäge nach einem der Ansprüche 1 bis 8, **dadurch gekennzeichnet,**
**daß** der Gegenanschlag (19), insbesondere der Anlagebereich des Gegenanschlags (19), in seiner Lage relativ zum Ruhestellungsanschlag (17), verstellbar ist.

## Claims

1. Mitre saw with
a support (1), which forms a workpiece support surface (2),
a mounting bracket (4) attached to the support (1) and
a saw unit (5), mounted on the mounting bracket (4) above the workpiece support surface (2), which can pivot about a transverse axis (6) from a raised inoperative position into a lowered sawing position and vice-versa, wherein the saw unit (5) is self-lockable on reaching the raised inoperative position and can be unlocked again by a manual operation of an unlocking element (7),
wherein the saw unit (5) has a drive motor (9), which is attached to a cap arm (15), which itself can pivot about the transverse axis (6),
wherein the cap arm (15) is preloaded by a spring arrangement (16) in the direction of the inoperative position of the saw unit (5) and has an inoperative position stop (17) to the rear, which comes into contact with a backstop (19) on the mounting bracket (4) when the saw unit (5) reaches the inoperative position,
**characterised in that**
the inoperative position stop (17) comes into contact with the backstop (19) or the backstop (19) with the inoperative position stop (17) linearly, preferably solely linearly, thus not two-dimensionally.

2. Mitre saw according to claim 1, **characterised in that** the inoperative position stop (17) is above the backstop (19) and comes into contact with the backstop (19) from above.

3. Mitre saw according to claim 1 or 2, **characterised in that** the inoperative position stop (17) has a circular shape or has a circular contact edge.

4. Mitre saw according to claim 3, **characterised in that** the inoperative position stop (17) has a slightly smaller diameter on its circumferential edge than that of the backstop (19) in the contact area.

5. Mitre saw according to claim 1 or 2, **characterised in that**, the inoperative position stop (17) has at least one contact edge (20) running transverse to the backstop (19).

6. Mitre saw according to claim 5, **characterised in that** the inoperative position stop (17) has two contact edges (20) running parallel to one another, whose spacing is smaller than the width of the backstop (19) in the contact area.

7. Mitre saw according to claim 6, **characterised in that** the contact edges (20) run approximately transverse to the transverse axis (6).

8. Mitre saw according to any one of the claims 1 to 7, **characterised in that** the contact area of the backstop (19) is formed by the head (21) of a screw, preferably by a slightly curved head (21) of a pan head screw.

9. Mitre saw according to any one of the claims 1 to 8, **characterised in that** the backstop (19), in particular the contact area of the backstop (19), can be adjusted in its position relative to the inoperative position stop (17).

## Revendications

1. Scie à onglet avec
un support (1), qui forme une surface d'appui (2) pour une pièce à usiner,
une fixation (4) montée sur le support (1), et
un agrégat de sciage (5), monté sur la fixation (4), au-dessus de la surface d'appui (2), qui est pivotant autour d'un axe transversal (6) d'une position de repos relevée vers une position abaissée et retournée,
dans lequel l'agrégat de sciage (5), lorsqu'il atteint la position de repos relevée, se verrouille automatiquement et peut être déverrouillé manuellement par l'activation d'un élément de déverrouillage (7),
dans lequel l'agrégat de sciage (5) comporte un moteur d'entraînement (9) qui est solidaire d'un bras (15) de scie qui est monté pivotant autour d'un axe transversal (6),
dans lequel le bras de scie (15) est sollicité par un agencement de ressort (16) vers la position de repos de l'agrégat de sciage (5) et comporte à l'arrière une butée de position de repos (17) qui vient en appui sur une contre butée (19) disposée sur la fixation (4) lorsque la position de repos souhaitée de l'agrégat de sciage (5) est atteinte,
**caractérisée en ce que**,
la butée de position de repos (17) est amenée en appui contre la contre butée (19) ou la contre butée (19) est amenée en appui contre la butée de position de repos (17) de façon linéaire, de préférence exclusivement linéaire, c'est-à-dire sans décrire une surface courbe.

2. Scie à onglet selon la revendication 1, **caractérisée en ce que**,
la butée de position de repos (17) est positionnée au-dessus de la contre butée (19) et vient en appui contre la contre butée (19) par le dessus.

3. Scie à onglet selon la revendication 1 ou 2, **caractérisée en ce que**,
la butée de position de repos (17) est de forme annulaire ou présente un bord d'appui de forme annulaire.

4. Scie à onglet selon la revendication 3, **caractérisée en ce que**,
la butée de position de repos (17) présente sur son bord d'appui périphérique, une section quelque peu inférieure à la contre butée (19) dans la zone d'appui.

5. Scie à onglet selon la revendication 1 ou 2, **caractérisée en ce que**,
la butée de position de repos (17) comporte au moins un bord d'appui (20) disposé transversalement par rapport à la contre butée (19).

6. Scie à onglet selon la revendication 5, **caractérisée en ce que**,
la butée de position de repos (17) comporte deux bords d'appui (20) disposés parallèlement entre eux, dont l'écartement est inférieur à la largeur de la contre butée (19) dans la zone d'appui.

7. Scie à onglet selon la revendication 6, **caractérisée en ce que**,
les bords d'appui (20) sont orientés sensiblement transversalement par rapport à l'axe transversal (6).

8. Scie à onglet selon l'une des revendications 1 à 7, **caractérisée en ce que**,
la zone d'appui de la contre butée (19) est constituée par la tête (21) d'une vis, de préférence par la tête (21) légèrement galbée d'une vis à tête plate.

9. Scie à onglet selon l'une des revendications 1 à 8, **caractérisée en ce que**,
la contre butée (19), en particulier la zone d'appui de la contre butée (19) est mobile en position par rapport à la butée de position de repos (17).
